# EUROPEAN PATENT SPECIFICATION

(11) **EP 0 215 910 B1**
(45) Date of publication and mention of the grant of the patent: **23.06.1993**
(21) Application number: 86902170.9
(22) Date of filing: 18.03.1986
(51) Int. Cl.: A23L 1/015, A23L 1/20, A23J 3/00

(54) **FOOD PROCESSING IN OXYGEN-FREE ENVIRONMENT**
NAHRUNGSMITTELBEHANDLUNG IN SAUERSTOFFFREIER UMGEBUNG
TRAITEMENT D'ALIMENTS DANS UN ENVIRONNEMENT DEPOURVU D'OXYGENE

(30) Priority: 29.03.1985 CA 477902
(43) Date of publication of application: 01.04.1987
(73) Proprietor: PROSOYA CORPORATION, Maryland Heights, MO 63043 (US)
(72) Inventor: GUPTA, Ragendra, Prasad, Ontario K1J 7W7 (CA); GUPTA, Rashmi, R., Ontario K1J 7W7 (CA)
(74) Representative: Ellowicz, Leo, Drs.
(86) International application number: US8600521
(87) International publication number: WO8605659

(56) References cited:
- WO-A-85/00728
- GB-A- 2 168 592
- US-A- 2 524 991
- US-A- 4 209 541
- US-A- 4 369 198
- CHEMICAL ABSTRACTS, vol. 88, no. 19, May 1978, page 407, abstract no. 135064m, Columbus, Ohio, US; & JP-A-77 154 545 (HOUSE FOOD INDUSTRIAL CO., LTD) 22-12-1977
- CHEMICAL ABSTRACTS, vol. 95, no. 9, October 1981, page 517, abstract no. 148929s, Columbus, Ohio, US; & JP-A-81 28 141 (MITSUBISHI CHEMICAL INDUSTRIES CO., LTD) 30-06-1981
- PATENT ABSTRACTS OF JAPAN, vol. 6, no. 177 (C-124)[1055], 11th September 1982; & JP-A-57 94 264 (MEIJI NIYUUGIYOU K.K.) 11-06-1982

## Description

### FIELD OF THE INVENTION

This invention concerns the processing of plant seeds for foods, food ingredients and edible oils which have no undesirable flavor or taste. More specifically, this invention relates to the method of preparing foods and beverages and extracting oils without off-flavors from soybeans and other legumes. The invention also relates to a method for producing soymilk from soybeans without these off-flavours.

### BACKGROUND OF THE INVENTION

To be generally acceptable the foods, which definition here will include food ingredients and edible oils, need not only be nutritious, versatile and economical, but also be attractive in color, aroma, taste and texture. Plant protein preparations mainly from legumes and nuts, like soybeans, have unacceptable off-flavors which score heavily against their positive properties and limit their use.

Lipoxygenase enzyme has been recognized as the major cause of off-flavors in most vegetable proteins sources including soybeans, peas and peanuts. Polyunsaturated fatty acids are oxidized through the catalytic action of lipoxygenase to initially produce hydroperoxides and finally yielding off-flavor causing agents like aldehydes, ketones, alcohols, furans, alphaketols and hydroxyacids.

Lipoxygenase is distributed throughout the cotyledons in legumes and many other seeds, but the enzyme is inactive because of its limited contact with oxygen and the substrate which are immobile due to the plants cell structure. Breaking of cell structure during the size reduction operation causes the oxidation to proceed. The control of off-flavors, therefore, requires inactivation of lipoxygenase enzyme.

Since lipoxygenase is heat sensitive, its inactivation is most commonly accomplished by thermal processing. At temperatures above 60°C. the half-lives of the various lipoxygenase enzymes rapidly decrease with increasing temperature. However, heat treatment also reduces the nitrogen solubility index and protein dispersibility index. The currently available methods for the effective elimination or reduction of off-flavors in plant proteins are not very compatible with the preparation of their highly functional forms because they require conditions that cause denaturing of the proteins. Also, the removal of off-flavors in edible oils not only makes the oil refining process complex but also causes oil degradation. A method is needed to solve these problems in a natural and simple way.

### DESCRIPTION OF THE PRIOR ART

Many methods for the processing of legumes and other protein and oil bearing seeds have been proposed which alleviate the off-flavor problems in the end food products; examples are Canadian Patents: 396108 issued to E.C. Winkler and H. Goller on January 16, 1933; 457603 issued to R.A. Wait on November 9, 1938; 675029 issued to T.W.M. Paulsen on November 26, 1963; 677452 issued to R.J. Moshy on January 7, 1964; 819072 issued to K. Fujita et al, on July 29, 1969; 920869 issued to J.R. Wagner on February 13, 1973; 1004531 issued to A.I. Nelson et al, on February 1, 1977; 1083879 issued to D.S. Hsieh et al, on August 19, 1980; and 1091081 issued to T. Wakana et al, on December 9, 1980.

The flavor problems in soybean proteins have been reviewed by J.E. Kinsella and S. Damodaran in a book "The Analysis and Control of Less Desirable Flavors in Foods and Beverages" edited by G. Charalambous and published by Academic Press in 1980. F.D. Gunstone and F.A. Norris in their book "Lipids in Foods: Chemistry, Biochemistry and Technology" published by Pergamon Press in 1983, have discussed the off-flavor problems in edible oils and methods for solving them. The prior art methods either try to inactivate the enzymes, such as lipoxygenase, involved in producing off-flavors, prior to seed desizing and deforming operations, or remove off-flavors as much as possible after they have developed. Both the approaches tend to degrade the end product nutritionally, functionally or ortherwise. For example, low or no beany flavor soymilks prepared with prior art processes give chalk-like mouth feel due to undesolved fine particles in the milks remaining even after intense high pressure homogenization. The problem generally results from the heat treatment of soybeans to inactivate lipoxygenase enzyme prior to or during the disintegration of soybeans in aqueous media. Such heat treatment adversely effects the protein dispersibility index, which in turn adversely effects the soymilk yield.

It has been known for a long time that oxygen is essential for producing off-flavor causing volatiles (Kinsella and Damodaran, loc. cit). This fact led many researchers to attempt disintegrating seeds in a reduced oxygen evironment. Johnson et al in WO-A-8500728 have attempted to control the oxygen presence during the steps of soybean comminution and slurrying by sparging the hammermill and slurry-forming auger with nitrogen. Sakakibara et al in Chem. Astr. Vol.88, no.19, May 1978, no.135064, discuss making odorless soybean milk by processing soybeans under O-free condition using an under water type grinder. However, these methods fail to explicitly or implicitly describe the oxygen level used or required for a successful implementation of these methods. A patent owned by Mitsubishi Chemicals Co. and abstracted in Chem. Abstr. Vol.95, no. 9, Oct. 1981, no. 148929, discloses a method for making an odorless milk-like material from seeds of high lipid contents. This method, in addition to being non-specific about the oxygen level, teaches the use of hot water for pulverizing the seeds. Clatfelter et al in U.S.-A- No. 4,209,541 issued on June 24, 1980, and Uchi et al in U.S.-A- No. 4,369,198 issued on Jan. 18, 1983, in their methods require heat treating the seeds sufficiently to inactivate the seed enzymes prior to or during seed disintegration for controlling the off-flavors.

The method of the present invention eliminates the off-flavor problem without adversely effecting the quality or yield of the end product.

Also, it clearly defines the operating conditions required to obtain a satifactory oxygen-free environment for eliminating the off-flavor problem.

### SUMMARY OF THE INVENTION

One objective of this invention is to provide a method of processing legumes and other seeds into foods having no off-flavor or undesirable taste but without adversely effecting nutritional quality and functionality of the end food products. Another objective of the invention to produce soymilk from soybeans with high yield and nitritional quality but without beany off-flavors and chalky mouth-feel. The present invention has established that off-flavors can be prevented from developing if size reduction and additional processing, until lipoxygenase enzyme is inactivated, is carried out in an oxygen-free environment.

Therefore, the invention relates to a method for producing protein foods and edible oils from protein and oil containing seeds comprising the steps of:
placing the seeds in an environment created to reduce its free-oxygen concentration below the threshold of volatiles causing off-flavors and bitter taste by the catalytic activity of lipoxygenase enzyme;
disintegrating the seeds in said environment such that air is prevented from entering in and mixing with said environment; and
separating protein foods and edible oils from the mixture resulting from the previous steps;
wherein said environment comprises a medium selected from the group consisting of an aqueous solvent, organic solvent, inert gas, and vacuum.

The invention also relates to a method for producing soymilk from soybeans comprising the steps of:
placing the seeds in an aqueous solvent, being selected from the group consisting of water, deoxygenated water, a dilute aqueous
solution of an alkali, a dilute aqueous solution of an acid and a dilute aqueous solution of a salt, created to reduce its free-oxygen concentration below the threshold of the volatiles causing off-flavours and bitter taste by the catalytic activity of lipoxygenase enzyme;
disintegrating the seeds in said aqueous solvent to obtain a slurry of the seeds;
cooking said slurry; and
then removing insoluble solids from said slurry to obtain soymilk.

### DESCRIPTION OF THE PREFERRED EMBODIMENTS

The present invention concerns processing of legumes and protein and oil-rich seeds with minimal denaturing to obtain end food products without undesirable flavors. The process comprises disintegration and deformation of the seeds, such as by grinding, milling and flaking, and further processing of the seeds up to and including the stage at which at least one of the seed members essential for reactions producing volatiles in off-flavors, such as lipoxygenase enzyme and lipids, is either inactivated or removed, in an environment deprived of most free oxygen, the latter being also an essential member in the said reaction. Since lipoxygenase catalyses the oxidation of lipids to produce off-flavor causing volatiles, one effective means of controlling off-flavors will be to desize the seeds into flakes, extract the seed oil by the solvent extraction process, and heat treat the oil to inactive lypoxygenase, in oxygenless environment. The edible oil thus extracted will be free from most off-flavors. Also, lipoxygenase in the deoiled seed flakes cannot be active since there are hardly any lipids left in the said flakes, especially on the surface where oxygen from air contacts said flakes. Thus, foods made from the said flakes with prior art methods will have little or no off-flavors. However, for best results it may be desirable to process said flakes up to and including the stage of cooking in oxygen-free environment.

Since flavor threshold may vary from below 0.1 ppm to above 100 ppm depending on the volatile causing an off-flavor and the substrate it is in, what is oxygen-free environment for one volatile and substrate combination may not be true for another such combination. However, as a rule of thumb, total oxygen presence in the substrate and the environment said substrate sits in should not exceed the flavor threshold of the off-flavor desired to be controlled.

One of the more common use of this invention is expected in processing soybeans to extract oil and to prepare artificial milk, protein concentrates and protein isolates, which are free from the characteristic soybean off-flavors and throat catching sensation.

In the following, the term aqueous medium will be used for drinkable water as well as for dilute aqueous solution of acid, alkali or salt, while the term vacuum will be used for pressures low enough to effect boiling of the aqueous medium without heating the same. The vacuum so defined causes release of most oxygen dissolved in water and replacement of residual air in the evacuated environment by water vapors.

The following processes illustrate the application of the invention to soybeans processing:
1. One embodiment of the method comprises soaking soybeans in an aqueous medium, rinsing the swelled soybeans, putting said soybeans and an aqueous medium in a container, creating vacuum in said container, disintegrating said soybeans in said container, isolating the said container from the device used to create vacuum, heating the resulting slurry in said container sufficiently to inactivate lipoxygenase enzyme and trypsin inhibitor, and removing undesolved solids from the cooked slurry to obtain soybean milk having good taste and mouth-feel but without off-flavors and throat catching sensation. Trypsin inhibitors are heat sensitive substance in soybeans which inhibit growth in growing animals and can cause pancreas enlargement and must be adequately inactivated in an edible product. Since soybeans are disintegrated at room temperatures, which results in high protein solubility in aqueous media, the process yields soybean milk which is remarkably close to dairy milk in mouth-feel.
2. Another embodiment of the method comprises soaking soybeans in an aqueous medium, rinsing the swelled soybeans, putting the said soybeans with an aqueous medium, to which a deoxygenating agent like sodium sulfite may have been added, in a closed container with a small vent tube at the top, filling it with said aqueous medium such that no air bubble is trapped in the container and thereby establishing an oxygenless-environment, disintegrating, cooking the resulting slurry in said container to inactivate lipoxygenase enzyme and trypsin inhibitor, and straining the cooked slurry to obtain soybean milk having good tase and mouth feel and acceptable flavor.
3. Another embodiment of the method comprises processing soybeans as in Embodiment 1 excepting flushing the vacuum with nitrogen gas.
4. Another embodiment of the method comprises processing soybeans as in Embodiment 3, excepting that the soaking of soybeans is also done in a container evacuated and flushed with nitrogen gas.
5. Another embodiment of the method comprises splitting and flaking dehulled soybeans, extracting oil from the soybean flakes by the solvent extraction process, flash desolventizing said flakes, heating the extracted oil sufficiently to inactivate lipoxygenase enzyme, and further processing the deoiled flakes to obtain various protein foods up to and including the stage of cooking, in vacuum or an inert gas environment. The resulting end products are free from undesirable flavors or taste.
6. Yet another embodiment of the invention method comprises splitting and flaking dehulled soybeans, extracting oil from the soybean flakes by the solvent extraction process, flash desolventizing said flakes, and heating the extracted oil sufficiently to inactivate lipoxygenase enzyme, in vacuum or an inert gas environment. The deoiled soybean flakes are exposed to air and kept under atmospheric conditions in the usual way until further processed. Because of the absence of lipids on soybean flake cells exposed to air, lipoxygenase remains inactive as in whole soybeans. Depending on the residual oil in said soybean flakes and the off-flavor level acceptable in the end products, it may or may not be necessary to process said flakes to make artificial milk, protein concentrate and protein isolates, in oxygen-free environment.

This invention is further illustrated by the following examples:

### EXAMPLE 1.

75 g of whole soybeans were soaked in tap water at room temperature for ten hours. The swelled soybeans were rinsed twice with water and put with 500 ml water in the so called one quart stainless steel container of a Warring Commercial Blendor®. The container was appropriately modified to stand high vacuum even when in blending operation. A vacuum good enough to effect boiling of water at room temperature was created in the container using a vacuum pump capable of pumping down to 3,33 · 10³ Pa (25 micrometre Hg pressure); water boils at 2266 Pa (17 mm Hg) pressure at 20°C. The water was allowed to boil for a few minutes to effect water degassing and to replace residual air in the container with water vapors. The container was then isolated from the vacuum pump so that accessive foaming may not occur when the soybeans are disintegrated. The blender was run for 30 seconds and the container was put in a boiling water bath for 20 minutes to inactivate lipoxygenase enzyme. The container was then opened to atmosphere and the soybean slurry transferred to a pressure cooker and the slurry cooked for a few minutes at 103 · 10³ Pa (15 p.s.i.) pressure to inactivate trypsin inhibitor. Finally, the soymilk was extracted by straining the slurry through a cloth and mechanically squeezing the fibrous residue. About 600 ml soymilk was obtained that had no off-flavor or bad taste.

### EXAMPLE 2.

150 g of whole soybeans were soaked in tap water at room temperature for ten hours. The swelled soybeans were rinsed twice with water and put in the container of Example 1. The container was filled with water to the top and closed with a custom made air tight transparent lid provided with a vent tube of small diameter. It was made sure that there were no water bubbles entrapped in the container. The blender was run for about one minute to disintegrate soybeans. The container was then put in a boiling water bath for 30 minutes to inactivate lipoxygenase enzyme. The container was opened and the slurry transferred to a pressure cooker and the slurry cooked for a few minutes at 103 · 10³ Pa (15 p.s.i.) pressure to inactivate trypsin inhibitor. Finally, soymilk was extracted by straining the slurry through a cloth and mechanically squeezing the fibrous residue. Soymilk was similar to that of Example 1 excepting that a very low beany flavor was detectable upon refrigeration.

### EXAMPLE 3.

Example 1 was repeated excepting that 500 ml of 0.1% sodium bicarbonate solution was used in place of water when placing soybean in the container. The soymilk obtained had no off-flavor or bad taste but had slightly more color than that of Example 1.

### EXAMPLE 4.

Example 2 was repeated excepting that about 100 miligrams of sodium sulfite was added to the contents of the container to deoxygenate water. The soymilk thus obtained was not significantly better than that of Example 2.

### EXAMPLE 5.

Example 1 was repeated with vacuum flushed with nitrogen gas at about atmospheric pressure. The soymilk obtained was similar to that in Example 1.

All the soymilks of Example 1 to 5 gave mouth-feel similar to that of dairy milk. Soymilk flavor or taste was easily possible to enhance or change by adding sugar, common salt, flavors and colors.

## Claims

1. A method for producing protein foods and edible oils from protein and oil containing seeds comprising the steps of:
placing the seeds in an environment created to reduce its free-oxygen concentration below the threshold of volatiles causing off-flavors and bitter taste by the catalytic activity of lipoxygenase enzyme;
disintegrating the seeds in said environment such that air is prevented from entering in and mixing with said environment; and
separating protein foods and edible oils from the mixture resulting from the previous steps;
wherein said environment comprises a medium selected from the group consisting of an aqueous solvent, organic solvent, inert gas, and vacuum.

2. A method for producing soymilk from soybeans comprising the steps of:
placing the seeds in an aqueous solvent, being selected from the group consisting of water, deoxygenated water, a dilute aqueous solution of an alkali, a dilute aqueous solution of an acid and a dilute aqueous solution of a salt, created to reduce its free-oxygen concentration below the threshold of the volatiles causing off-flavours and bitter taste by the catalytic activity of lipoxygenase enzyme;
disintegrating the seeds in said aqueous solvent to obtain a slurry of the seeds,
cooking said slurry; and
then removing insoluble solids from said slurry to obtain soymilk.

3. A method as claimed in claim 1 or 2 wherein:
said aqueous solvent comprises water and about 0.1 percent by weight of sodium bicarbonate.

4. A method as claimed in claim 1 wherein said disintegration comprises flaking seeds to make seed flakes in said medium; and which further comprises:
exposing said flakes to an organic solvent for removing oil from said flakes;
separating oil from the organic solvent; and
flash-desolventizing the flakes to obtain deoiled flakes.

5. A method as claimed in claim 4 which further comprises disintegrating said deoiled flakes in said medium such that air is prevented from entering in and mixing with said medium, in order to produce artificial milk, protein concentrates and isolates, or flour.

6. A method as claimed in claim 4 which further comprises disintegrating said deoiled flakes in said medium under atmospheric conditions in order to produce artificial milk, protein concentrates and isolates, or flour.

7. A method as claimed in claim 5, wherein said medium is an aqueous solvent.

8. A method as claimed in claim 6, wherein said medium is an aqueous solvent.

## Patentansprüche

1. Verfahren zur Herstellung von Proteinnahrung und Nährölen aus Protein und Öl enthaltenden Saaten, welches folgende Schritte aufweist:
Plazieren der Saaten in einer Umgebung, die erzeugt wird, indem man ihre Konzentration an freiem Sauerstoff unter die Schwelle der flüchtigen Stoffe absenkt, die Geschmacksverlust und bitteren Geschmack durch die katalytische Wirkung des Lipoxygenaseenzyms bewirken;
Zerkleinern der Saaten in dieser Umgebung, so daß Luft gehindert wird, in diese einzudringen und sich mit dieser Umgebung zu mischen; und
Abtrennen der Proteinnahrung und der Nähröle aus der aus den vorstehenden Schritten erzeugten Mischung;
wobei diese Umgebung ein Medium enthält, welches ausgewählt ist aus der Gruppe bestehend aus wäßrigen Lösungsmitteln, organischen Lösungsmitteln, Inertgas und Vakuum.

2. Verfahren zur Herstellung von Sojamilch aus Sojabohnen umfassend die Schritte:
Plazieren der Saaten in einem wäßrigen Lösungsmittel, ausgewählt aus der Gruppe bestehend aus Wasser, deoxygeniertem Wasser, einer verdünnten wäßrigen Lösung eines Alkalis, einer verdünnten wäßrigen Lösung einer Säure und einer verdünnten wäßrigen Lösung eines Salzes, erzeugt um die Konzentration an freiem Sauerstoff unter die Schwelle der flüchtigen Stoffe abzusenken, die Geschmacksverlust und bitteren Geschmack durch die katalytischen Wirkung des Lipoxygenaseenzyms bewirken;
Zerkleinern der Saaten in diesem wäßrigen Lösungsmittel zur Erzeugung einer Aufschlämmung der Saaten;
Kochen dieser Aufschlämmung; und
Entfernen der ungelösten Feststoffe aus dieser Aufschlämmung zur Erzeugung der Sojamilch.

3. Verfahren nach Anspruch 1 oder 2, wobei dieses wäßrige Lösungsmittel Wasser und etwa 0,1 Gew.% Natriumbicarbonat enthält.

4. Verfahren nach Anspruch 1, wobei diese Zerkleinerung das Schnipseln der Saaten zur Herstellung von Saatschnipseln in diesem Medium enthält und welches weiterhin umfaßt:
Das Aufschließen dieser Schnipsel in einem organischen Lösungsmittel zur Entfernung von Öl aus diesen Schnipseln;
Abtrennung des Öls aus dem organischen Lösungsmittel und
Flashverdampfung des Lösungsmittels aus den Schnipseln zur Erzeugung entölter Schnipsel.

5. Verfahren nach Anspruch 4, welches weiterhin die Zerkleinerung der entölten Schnipsel in diesem Medium enthält, indem Luft daran gehindert wird in dieses Medium einzudringen und sich mit diesem Medium zu mischen, so daß künstliche Milch, Proteinkonzentrate und Isolate oder Mehl erhalten werden.

6. Verfahren nach Anspruch 4, welches weiterhin die Zerkleinerung dieser entölten Schnipsel in diesem Medium unter atmosphärischen Bedingungen enthält, um künstliche Milch, Proteinkonzentrate und Isolate oder Mehl herzustellen.

7. Verfahren nach Anspruch 5, bei dem dieses Medium ein wäßriges Lösungsmittel ist.

8. Verfahren nach Anspruch 6, bei dem dieses Medium ein wäßriges Lösungsmittel ist.

## Revendications

1. Procédé de production d'aliments protéiniques et d'huiles comestibles à partir de graines contenant des protéines et de l'huile, comprenant les étapes suivantes :
on place les graines dans un environnement créé pour réduire leur concentration en oxygène libre en dessous du seuil où les substances volatiles provoquent des odeurs et une saveur amère en raison de l'activité catalytique de l'enzyme lipoxygénase;
on désintègre les graines dans ledit environnement de sorte que l'on empêche l'air d'entrer dans ledit environnement et de s'y mélanger; et
on sépare des aliments protéiniques et des huiles comestibles du mélange résultant des opérations précédentes;
procédé dans lequel ledit environnement comprend un milieu choisi dans le groupe des solvants aqueux, des solvants organiques, des gaz inertes et du vide.

2. Procédé de production de lait de soja à partir de graines de soja comprenant les étapes suivantes :
on place les graines dans un solvant aqueux choisi dans le groupe constitué de l'eau, de l'eau désoxygénée, d'une solution aqueuse diluée d'un alcali, d'une solution aqueuse diluée d'un acide et d'une solution aqueuse diluée d'un sel, créé pour réduire leur concentration en oxygène libre en dessous du seuil où les substances volatiles provoquent des odeurs et une saveur amère par l'activité catalytique de l'enzyme lipoxygénase;
on désintègre les graines dans ledit solvant aqueux pour obtenir une bouillie de graines;
on cuit ladite bouillie; et
on élimine ensuite les solides insolubles de ladite bouillie pour obtenir du lait de soja.

3. Procédé selon la revendication 1 ou 2, dans lequel ledit solvant aqueux comprend de l'eau et environ 0,1 % en poids de bicarbonate de sodium.

4. Procédé selon la revendication 1, dans lequel ladite désintégration consiste à floconner les graines pour obtenir des flocons de ces graines dans ledit milieu, le procédé consistant par ailleurs :
à exposer lesdits flocons à un solvant organique pour en éliminer l'huile;
à séparer l'huile du solvant organique; et
à désolventiser les flocons par flash.

5. Procédé selon la revendication 4, qui consiste par ailleurs à désintégrer lesdits flocons déshuilés dans ledit milieu de sorte que l'on empêche l'air de pénétrer dans ledit milieu et de s'y mélanger pour produire du lait artificiel, des concentrés et des isolats protéiniques, ou de la farine.

6. Procédé selon la revendication 4, qui consiste par ailleurs à désintégrer lesdits flocons déshuilés dans ledit milieu dans des conditions atmosphériques pour obtenir du lait artificiel, des concentrés et des isolats protéiniques, ou de la farine.

7. Procédé selon la revendication 5, dans lequel ledit milieu est un solvant aqueux.

8. procédé selon la revendication 6, dans lequel ledit milieu est un solvant aqueux.
